# NEUE EUROPÄISCHE PATENTSCHRIFT

(11) **EP 1 048 401 B2**
(45) Veröffentlichungstag und Bekanntmachung des Hinweises auf die Entscheidung über den Einspruch: **16.11.2005**
(45) Hinweis auf die Patenterteilung: 25.06.2003
(21) Anmeldenummer: 00107867.4
(22) Anmeldetag: 12.04.2000
(51) Int. Cl.: B23Q 39/02, B23Q 5/28, B23Q 1/00, B23Q 3/155

(54) **Werkzeugwechselvorrichtung**
Tool change apparatus
Dispositif de changement d'outils

(30) Priorität: 29.04.1999 DE 19919553
(43) Veröffentlichungstag der Anmeldung: 02.11.2000
(73) Patentinhaber: EMAG MASCHINENFABRIK GMBH, D-73084 Salach (DE)
(72) Erfinder: Hessbrüggen, Norbert, 73107 Eschenbach (DE); Wernz, Christoph, 70174 Stuttgart (DE)
(74) Vertreter: Zmyj, Erwin

(56) Entgegenhaltungen:
- EP-A- 0 245 749
- DD-A- 250 481
- DE-A- 3 625 218
- DE-A- 3 817 873
- DE-C- 3 929 136
- DE-U- 8 915 600
- US-A- 4 872 244
- US-A- 5 081 762
- US-A- 5 632 075

## Beschreibung

Die Erfindung bezieht sich auf einen Werkzeugwechselvorrichtung nach dem Oberbegriff des Anspruchs 1.

Ein Werkzeugwechselvorrichtung dieser Art ist aus der DE 38 17 873 C bekannt. Da solche Werkzeugwechselvorrichtungen eine große Masse aufweisen, insbesondere, wenn sie für eine größere Anzahl von Werkzeugen und unter Umständen für angetriebene Werkzeuge vorbereitet sind, benötigt man ein hohes Drehmoment beim Schwenkantrieb, um den Werkzeugwechselvorrichtung von einer Arbeitsstellung in eine weitere Arbeitsstellung, in der ein anderes Werkzeug zum Einsatz kommt, zu verschwenken. Um die Wirkung des Motors zu verstärken, ist deshalb der Einsatz eines Getriebes erforderlich, um das notwendige Drehmoment für eine hohe Drehbeschleunigung zur Verfügung zu stellen. Mechanische Getriebe unterliegen wegen der hohen Belastung und der hohen Schalthäufigkeit einem starken Verschleiß und haben obendrein einen hohen Platzbedarf. Weiterhin bereitet die Zuführung von Antriebsenergie zu den angetriebenen Werkzeugen sowie die Zuführung von Kühlmitteln Schwierigkeiten, da hierfür ein weiterer Platzbedarf erforderlich ist.

Aus G 89 15 600.5 U1 geht eine Werkzeugwechselvorrichtung entsprechend dem Oberbegriff des Anspruchs 1 als bekannt hervor. Bei dieser bekannten Werkzeugwechselvorrichtung weist jedoch die Hohlwelle, auf der der Ringmotor angeordnet ist, nur einen so geringen Durchmesser auf, dass zwar eine Antriebswelle für die anzutreibenden Werkzeuge hindurchgeführt werden kann, der Antriebsmotor aber muß außerhalb dieser Anordnung verbleiben, was den Platzbedarf erhöht.

Aufgabe der Erfindung ist es, eine Werkzeugwechselvorrichtung der eingangs genannten Art so auszugestalten, dass bei geringem Platzbedarf der Antrieb der Werkzeuge ermöglicht wird und die Übertragung von Antriebsenergie und/oder sonstigen Versorgungsmitteln zu den Werkzeugen vereinfacht ist.

Diese Aufgabe wird bei einer Werkzeugwechselvorrichtung mit den Merkmalen des Patentanspruchs 1 gelöst.

Aufgrund des großen Innendurchmessers der Hohlwelle können ohne zusätzlichen Platzbedarf der Antriebsmotor und/oder Mittel zur Versorgung der Werkzeuge untergebracht werden, wodurch die bisherige, außenliegende Anordnung von Motoren und Übertragungsleitungen, die einen großen Platzbedarf erfordern, entbehrlich ist.

Eine vorteilhafte Ausgestaltung der Erfindung besteht darin, das der Antrieb für die Werkzeuge ein Servomotor ist.

Um einerseits einen möglichst großen Hohlraum in der Hohlwelle für Antriebsmittel und/oder sonstige Versorgungsmittel zur Verfügung stellen zu können und andererseits den Außendurchmesser der Werkzeugwechselvorrichtung dennoch gering zu halten, ist in weiterer Ausgestaltung vorgesehen, daß mindestens ein Teil des Mantels der Hohlwelle durch den Rotor des Ringmotors gebildet ist. Die Hohlwelle ist entweder unterbrochen, wobei mindestens ein Teil des Mantels durch den Rotor gebildet wird, so daß dieser nicht auf der Hohlwelle, sondern innerhalb des Mantels der Hohlwelle angeordnet ist. Die Hohlwelle kann aber auch insgesamt den Rotor bilden.

Es ist aber auch möglich, daß der Rotor des Ringmotors auf dem Mantel der Hohlwelle angeordnet ist.

Bei Werkzeugwechselvorrichtungen der eingangs erläuterten Art wird der Werkzeugträger üblicherweise durch eine Bremse oder eine Verriegelung, beispielsweise in Form einer Hirth-Verzahnung in der entsprechenden Arbeitsposition gehalten.

Erfindungsgemäß ist vorgesehen, daß der Werkzeugträger durch elektrische Ansteuerung des Ringmotors positionierbar ist. Durch das große Drehmoment, welches ein solcher Motor erzeugen kann, ist es nicht nur möglich, den Werkzeugträger rasch von einer Position in die andere zu verschwenken, sondern auch in einer bestimmten Position ohne Bremsen und sonstigen mechanischen Verriegelungen zu halten.

Eine weitere vorteilhafte Ausgestaltung der Erfindung besteht darin, daß der Werkzeugträger als Ringkörper ausgebildet ist, daß im Ringkörperdie Werkzeuge angeordnet sind, daß eine mit den Werkzeugen kuppelbare Kraftübertragungsvorrichtung in dem vom Ringkörper umschlossenen Hohlraum angeordnet ist und daß die Kraftübertragungsvorrichtung mit dem in der Hohlwelle angeordneten Mittel für den Antrieb der Werkzeuge in Verbindung steht. Hierdurch ergibt sich eine äußerst kompakte und platzsparende Anordnung der Kraftübertragungsvorrichtung, die hinsichtlich ihres Platzbedarfes nach außen nicht in Erscheinung tritt, da sie innerhalb des vom Ringkörper des Werkzeugträgers umschlossenen Hohlraum vorgesehen ist.

Eine vorteilhafte Ausgestaltung, die in vorteilhafter Weise den grundlegenden Erfindungsgedanken weiterbildet, ist darin zu sehen, daß die Kraftübertragungsvorrichtung als ein Winkeltrieb ausgebildet ist, der eine durch den Mittelpunkt des vom Ringkörper umschlossenen Hohlraumes radial verlaufende Zentralwelle aufweist, die in einem drehbar gegenüber der Hohlwelle abgestützten Lagerkäfig gelagert ist und die an ihrem einen Ende ein Kegelrad, das mit einem von dem Servomotor angetriebenen Kegelrad kämmt sowie an ihrem anderen Ende eine Kupplung trägt, die zur Verbindung der antreibbaren Zentralwelle mit jedem antreibbaren Werkzeug des Werkzeugträgers dient. Dieser Winkeltrieb befindet sich im Zentrum des ringförmig ausgebildeten Werkzeugträgers. Aufgrund seiner drehbaren Abstützung gegenüber der Hohlwelle ist er stets im Ruhezustand, so daß dieser Winkeltrieb keine Vergrößerung der zu beschleunigenden Masse des Werkzeugträgers darstellt.

Ein Mittel für die Versorgung der Werkzeuge kann mindestens eine Leitung für das Zuführen von Kühlmittel und/oder von Energie sein. Die Leitung für die Versorgung von Werkzeugen kann im Mantel des Servomotors für den Werkzeugantrieb oder in der Welle des Servomotors für den Werkzeugantrieb angeordnet sein. Es ist aber auch möglich, daß die Leitung für die Versorgung von Werkzeugen zwischen dem Mantel des Servomotors und der Hohlwelle angeordnet ist.

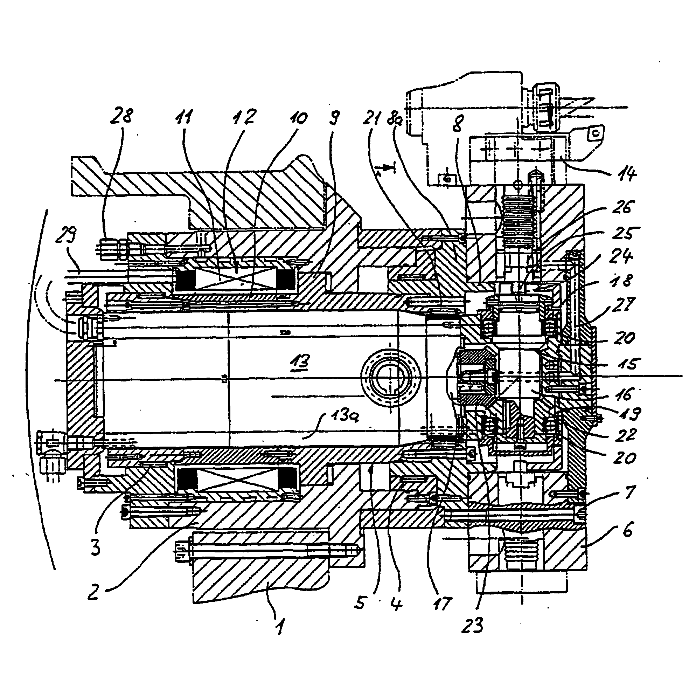

Die Erfindung wird nachfolgend anhand eines Ausführungsbeispieles näher erläutert. Die einzige Zeichnung zeigt einen Schnitt durch eine Werkzeugwechselvorrichtung.

In einem nur andeutungsweise dargestellten Grundgehäuse 1 einer Werkzeugwechselvorrichtung, das maschinenfest oder auf einem Schlitten angeordnet sein kann, ist ein Gehäusemantel 2 angeordnet, der Lager 3, 4 für die Lagerung einer insgesamt mit 5 bezeichneten Hohlwelle dient, an deren in der Zeichnung rechten Ende ein Werkzeugträger 6 mittels Schrauben 7 befestigt ist. Der Werkzeugträger 6 ist als Ringkörper ausgebildet und auf einem Bund 8 eines Flanschkörpers 8a zentriert ist, der an einem zylinderförmigen Teil 9 der insgesamt bezeichneten Hohlwelle 5 angesetzt ist und somit einen Teil der Hohlwelle 5 bildet. Der zylinderförmige Teil 9 der Hohlwelle 5 ist etwa in der Mitte unterbrochen und durch einen aus einzelnen Magneten zusammengesetzten Rotor 10 ersetzt, den ein elektrische Wicklungen 11 aufweisender Stator 12 umgibt, der fest mit dem Gehäusemantel 2 verbunden ist. Dieser Stator 12 bildet zusammen mit dem Rotor 10 einen Ringmotor mit hohem Drehmoment. Dabei ist der in seinem Innendurchmesser so ausgebildet, daß er mit der Innenwand des zylindrischen Teils 9 der Hohlwelle 5 fluchtet. Bei Erregung der Wicklungen des Stators 12 wird der Rotor 10 und damit die Hohlwelle 5 angetrieben. Da diese Hohlwelle 5 drehfest mit dem Werkzeugträger 6 verbunden ist, wird auch dieser durch die Drehbewegung der Hohlwelle 5 geschwenkt.

Der Innenraum der Hohlwelle 5 dient zur Aufnahme eines Servomotors 13 der zum Antrieb eines mit strichpunktierten Linien angedeuteten Werkzeuges 14 vorgesehen ist, das am äußeren Umfang des ringförmig ausgebildeten Werkzeugträgers 6 sitzt. Für die Kraftübertragung vom Servomotor 13 zum angetriebenen Werkzeug 14 dient eine insgesamt mit 15 bezeichneter Winkeltrieb, der eine Zentralwelle 16 aufweist, die senkrecht zur Achse der Antriebswelle 17 des Servomotors 13 durch den Mittelpunkt des vom ringförmigen Werkzeugträgers 6 umschlossenen Hohlraumes 18 in radialer Richtung verläuft. Diese Zentralwelle 16 ist in einem Gehäuse 19 mittels Kugellager 20 gelagert, das über Wälzlager 21 gegenüber dem Flanschkörper 8a abgestützt ist, der einen Teil der Hohlwelle 5 bildet. An dem in der Zeichnung unteren Ende der Zentralwelle 16 ist ein Kegelrad 22 angeordnet, das mit einem auf der Antriebswelle 17 sitzenden Kegelrad 23 kämmt. An dem dem Kegelrad 22 gegenüberliegenden Ende trägt die Zentralwelle eine Kupplung 24, die mit einem entsprechend ausgebildeten Endstück 25 eines Werkzeugschaftes 26 in der jeweiligen Schaltstellung des Werkzeugträgers 6 kuppelbar ist.

Mit 27 ist eine Versorgungsleitung bezeichnet, die bis zum Werkzeug 14 reicht und durch den Mantel 13a des Servomotors 13 sowie das Gehäuse 19 geführt ist.

Eine Kühlmittelleitung 28 dient zur Zuführung von Kühlmittel für den Stator 12 des Ringmotors. Die elektrische Energie wird über ein Kabel 29 zugeführt.

## Patentansprüche

1. Werkzeugrevolver, mit einem drehbar gelagerten Werkzeugträger mit mindestens zwei Werkzeugen, der mittels eines elektrischen Schwenkantriebes in die jeweilige Arbeitsstellung für ein Werkzeug verschwenkbar ist, wobei der Werkzeugträger mit einer Hohlwelle drehfest verbunden und durch diese Hohlwelle drehbar gelagert ist, wobei als Schwenkantrieb ein elektrischer Ringmotor, frei von zusätzlichen, übersetzenden, mechanischen Kraftübertragungselementen, unmittelbar an der Hohlwelle angreift und wobei die Hohlwelle zumindest ein Teil für den Antrieb und/oder zumindest ein Teil für die Versorgung der Werkzeuge aufnimmt, **dadurch gekennzeichnet, dass** in Hohlwelle (5) ein Antriebsmotor (13) für die Werkzeuge (14) angeordnet ist.

2. Werkzeugrevolver nach Anspruch 1, **dadurch gekennzeichnet, dass** der Antrieb für die Werkzeuge (14) ein Servomotor (13) ist.

3. Werkzeugrevolver nach Anspruch 1 oder 2, **dadurch gekennzeichnet, dass** mindestens ein Teil des Mantels (9) der Hohlwelle (5) durch einen Rotor (10) des Ringmotors (10, 12) gebildet ist.

4. Werkzeugrevolver nach Anspruch 1 oder 2, **dadurch gekennzeichnet, dass** ein Rotor (10) des Ringmotors (10, 12) auf dem Mantel (9) der Hohlwelle (5) angeordnet ist.

5. Werkzeugrevolver nach einem der Ansprüche 1 bis 4, **dadurch gekennzeichnet, dass** der Werkzeugträger (6) durch elektrische Ansteuerung des Ringmotors (10, 12) positionierbar ist.

6. Werkzeugrevolver nach einem der Ansprüche 1 bis 5, **dadurch gekennzeichnet, dass** der Werkzeugträger (6) als Ringkörper ausgebildet ist, dass im Ringkörper die Werkzeuge (14) angeordnet sind, dass eine mit den Werkzeugen kuppelbare Kraftübertragungsvorrichtung (15) in dem vom Ringkörper umschlossenen Hohlraum (18) angeordnet ist und dass die Kraftübertragungsvorrichtung (15) mit dem in der Hohlwelle (5) angeordneten Teil (13) für den Antrieb der Werkzeuge (14) in Verbindung steht.

7. Werkzeugrevolver nach Anspruch 6, **dadurch gekennzeichnet, dass** die Kraftübertragungsvorrichtung (15) als ein Winkeltrieb ausgebildet ist, der eine durch den Mittelpunkt des vom Ringkörper (6) umschlossenen Hohlraumes (18) radial verlaufende Zentralwelle (16) aufweist, die in einem drehbar gegenüber der Hohlwelle (5) abgestützten Lagerkäfig (19) gelagert ist und die an ihrem einen Ende ein Kegelrad (22), das mit einem vom Servomotor (13) angetriebenen Kegelrad (23) kämmt, sowie an ihrem anderen Ende eine Kupplung (24) trägt, die zur Verbindung der antreibbaren Zentralwelle (16) mit jedem antreibbaren Werkzeug (14) des Werkzeugträgers (6) dient.

8. Werkzeugrevolver nach einem der Ansprüche 1 bis 7, **dadurch gekennzeichnet, dass** ein Teil für die Versorgung der Werkzeuge (14) mindestens eine Leitung (27) für das Zuführen von Kühlmittel ist.

9. Werkzeugrevolver nach Anspruch 8, **dadurch gekennzeichnet, dass** die Leitung (27) für die Versorgung der Werkzeuge (14) in einem Mantel (13a) des Servomotors (13) für den Werkzeugantrieb angeordnet ist.

10. Werkzeugrevolver nach Anspruch 8, **dadurch gekennzeichnet, dass** die Leitung (27) für die Versorgung der Werkzeuge (14) in der Welle (17) des Servomotors (13) für den Werkzeugantrieb angeordnet ist.

11. Werkzeugrevolver nach Anspruch 8, **dadurch gekennzeichnet, dass** die Leitung (27) für die Versorgung der Werkzeuge (14) zwischen einem Mantel (13a) des Servomotors (10) und der Hohlwelle (5) angeordnet ist.

## Claims

1. Tool turret, having a rotatably mounted tool carrier which has at least two tools and can be swivelled into the respective working position for a tool by means of an electric swivel drive, the tool carrier being connected to a hollow shaft in a rotationally fixed manner and being rotatably mounted by this hollow shaft, an electric ring motor acting as swivel drive directly on the hollow shaft in a manner free of additional, speed-transforming, mechanical force-transmission elements, and the hollow shaft accommodating at least one part for driving the tools and/or at least one part for supplying the tools, **characterized in that** a drive motor (13) for the tools (14) is arranged in the hollow shaft (5).

2. Tool turret according to Claim 1, **characterized in that** the drive for the tools (14) is a servomotor (13).

3. Tool turret according to Claim 1 or 2,
**characterized in that** at least one part of the shell (9) of the hollow shaft (5) is formed by a rotor (10) of the ring motor (10, 12).

4. Tool turret according to Claim 1 or 2, **characterized in that** a rotor (10) of the ring motor (10, 12) is arranged on the shell (9) of the hollow shaft (5).

5. Tool turret according to one of Claims 1 to 4, **characterized in that** the tool carrier (6) can be positioned by electrical activation of the ring motor (10, 12).

6. Tool turret according to one of Claims 1 to 5, **characterized in that** the tool carrier (6) is designed as an annular body, **in that** the tools (14) are arranged in the annular body, **in that** a force-transmission device (15) which can be coupled to the tools is arranged in the cavity (18) enclosed by the annular body, and **in that** the force-transmission device (15) is connected to the part (13), arranged in the hollow shaft (5), for driving the tools (14).

7. Tool turret according to Claim 6, **characterized in that** the force-transmission device (15) is designed as an angular drive having a central shaft (16) which runs radially through the centre of the cavity (18) enclosed by the annular body (6) and which is mounted in a bearing cage (19) supported so as to be rotatable relative to the hollow shaft (5) and which carries a bevel gear (22) at its one end, this bevel gear (22) meshing with a bevel gear (23) driven by the servomotor (13), and a coupling (24) at its other end, this coupling (24) serving to connect the drivable central shaft (16) to each drivable tool (14) of the tool carrier (6).

8. Tool turret according to one of Claims 1 to 7, **characterized in that** a part for supplying the tools (14) is at least one line (27) for feeding coolant.

9. Tool turret according to Claim 8, **characterized in that** the line (27) for supplying the tools (14) is arranged in a shell (13a) of the servomotor (13) for the tool drive.

10. Tool turret according to Claim 8, **characterized in that** the line (27) for supplying the tools (14) is arranged in the shaft (17) of the servomotor (13) for the tool drive.

11. Tool turret according to Claim 8, **characterized in that** the line (27) for supplying the tools (14) is arranged between a shell (13a) of the servomotor (13) and the hollow shaft (5).

## Revendications

1. Dispositif d'échange d'outil comportant un porte-outil s'appuyant en rotation, équipé d'au moins deux outils et qui peut pivoter au moyen d'une commande de pivotement électrique vers la position de travail respective pour un outil, le porte-outil étant relié de manière fixe en rotation à un arbre creux et s'appuyant en rotation par l'intermédiaire de cet arbre creux, un moteur annulaire servant de commande de pivotement s'engrenant directement sur l'arbre creux sans éléments de transmission de force mécaniques démultiplicateurs supplémentaires et l'arbre creux recevant au moins une pièce pour la commande et/ou au moins une pièce pour l'alimentation des outils, **caractérisé en ce que**, dans l'arbre creux (5), un moteur d'entraînement (13) pour les outils (14) est disposé.

2. Dispositif d'échange d'outil selon la revendication 1, **caractérisé en ce que** la commande pour les outils (14) est un servomoteur (13).

3. Dispositif d'échange d'outil selon la revendication 1 ou 2, **caractérisé en ce qu'**au moins une pièce de la chemise (9) de l'arbre creux (5) est constituée par un rotor (10) du moteur annulaire (10, 12).

4. Dispositif d'échange d'outil selon la revendication 1 ou 2, **caractérisé en ce qu'**un rotor (10) du moteur annulaire (10, 12) est disposé sur la chemise (9) de l'arbre creux (5).

5. Dispositif d'échange d'outil selon l'une quelconque des revendications 1 à 4, **caractérisé en ce que** le porte-outil (6) est positionnable par commande électrique du moteur annulaire (10, 12).

6. Dispositif d'échange d'outil selon l'une quelconque des revendications 1 à 5, **caractérisé en ce que** le porte-outil (6) est réalisé sous forme d'un corps annulaire, que les outils (14) sont disposés dans le corps annulaire, qu'un dispositif de transmission de force (15) pouvant être couplé aux outils est disposé dans la cavité (18) circonscrite par le corps annulaire et que le dispositif de transmission de force (15) est en liaison avec la pièce (13) disposée dans l'arbre creux pour l'entraînement des outils (14).

7. Dispositif d'échange d'outil selon la revendication 6, **caractérisé en ce que** le dispositif de transmission de force (15) est réalisé sous forme d'une commande orthogonale qui présente un arbre central (16) qui s'étend radialement à travers le centre de la cavité (18) circonscrite par le corps annulaire (6) et s'appuie dans une cage de roulements (19) s'appuyant en rotation par rapport à l'arbre creux (5), et qui supporte à une de ses extrémités une roue conique (22) s'empeignant avec une roue conique (23) entraînée par le servomoteur (13) et supporte à son autre extrémité un accouplement (24) qui sert à relier l'arbre central pouvant être entraîné (16) à tout outil pouvant être entraîné (14) du porte-outil (6).

8. Dispositif d'échange d'outil selon l'une quelconque des revendications 1 à 7, **caractérisé en ce qu'**une pièce d'alimentation des outils (14) est constituée par au moins une conduite (27) d'alimentation en refroidisseur.

9. Dispositif d'échange d'outil selon la revendication 8, **caractérisé en ce que** la conduite (27) d'alimentation des outils (14) est disposée dans une chemise (13a) du servomoteur (13) pour l'entraînement des outils.

10. Dispositif d'échange d'outil selon la revendication 8, **caractérisé en ce que** la conduite (27) d'alimentation des outils (14) est disposée dans l'arbre (17) du servomoteur (13) pour l'entraînement des outils.

11. Dispositif d'échange d'outil selon la revendication 8, **caractérisé en ce que** la conduite (27) d'alimentation des outils (14) est disposée entre une chemise (13a) du servomoteur (10) et l'arbre creux (5).
